# EUROPEAN PATENT APPLICATION

(11) **EP 4 113 383 A1**
(43) Date of publication of application: **04.01.2023**
(21) Application number: 22180687.0
(22) Date of filing: 23.06.2022
(51) Int. Cl.: G06N 3/04, G06N 3/08, G06F 40/169, G06F 40/295, G06F 40/30, G06N 5/02

(54) **METHOD AND DEVICE FOR PRESENTING PROMPT INFORMATION, AND STORAGE MEDIUM**

(30) Priority: 01.07.2021 CN 202110747494
(71) Applicant: FUJITSU LIMITED, Kawasaki-shi, Kanagawa 211-8588 (JP)
(72) Inventor: Cao, Yiling, Beijing, 100027 (CN); Zheng, Zhongguang, Beijing, 100027 (CN); Fang, Lu, Beijing, 100027 (CN); Sun, Jun, Beijing, 100027 (CN)
(74) Representative: Hoffmann Eitle

(57) **Abstract**

Disclosed are a method and a device for presenting prompt information, and a storage medium. The method includes: generating a mask vector for an entity, wherein the mask vector is used to identify a position of the entity in a statement composed of the entity and context; generating a first vector and a second vector based on the entity and the context by a BERT layer; generating a third vector based on the mask vector and the second vector by an entity average layer; concatenating the first vector and the third vector by a concatenation layer to generate a fourth vector; predicting which concept of a plurality of predefined concepts the entity corresponds to, based on the fourth vector by a first classifier; predicting which type of a plurality of predefined types the entity corresponds to, based on the fourth vector by a second classifier; jointly training the first classifier and the second classifier; and determining a concept to which the entity corresponds based on a prediction result of the trained first classifier, and generating the prompt information for presentation to the user based on the determined concept.

## Description

### FIELD

The present disclosure generally relates to entity disambiguation technology, and more particularly, to a method and device for presenting prompt information regarding an entity in text to a user by utilizing the entity disambiguation technology, and a storage medium.

### BACKGROUND

In a practical language environment, there is often a situation where an entity name corresponds to multiple concepts. For example, an entity name "apple" in text may refer to a kind of fruit or the Apple Inc. In order to solve such problem of ambiguity caused by the same entity name, entity disambiguation technology has been proposed and developed.

The entity disambiguation technology can link an entity mention (entity) in text to an appropriate concept in a knowledge graph, which plays a fundamental role in many domains such as question answering, semantic search, and information extraction. A concept indicates a matter or thing that is distinguishable and exists independently. The knowledge graph contains a large number of concepts, and different concepts may be related to one another. For example, in reality, there are two people with similar names, i.e., Michael Jeffrey Jordan who is a basketball star, and Michael Owen Jordan who is a professional in machine learning field. Accordingly, the knowledge graph may contain two concepts: "a basketball star Michael Jeffrey Jordan" and "a machine-learning expert Michael Owen Jordan". In addition, there may be a number of sport concepts associated with "a basketball star Michael Jeffrey Jordan" and a number of computer science concepts associated with "a machine-learning expert Michael Owen Jordan" in the knowledge graph. When an entity "Michael Jordan" appears in text, it is required to determine, based on a context, whether the entity refers to "a basketball star Michael Jeffrey Jordan" or "a machine-learning expert Michael Owen Jordan" in the knowledge graph.

When it is determined, with the entity disambiguation technology, that the entity appearing in the text corresponds to a specific concept, prompt information based on the determined concept may be presented to a user who is reading the text, so that the user can immediately understand the entity correctly. For example, with regard to an entity "Apple" appearing in the text "Apple released a new mobile phone today..." a prompt "Apple Inc.: an American high-tech company whose products include iPhones..." may be provided to the user.

However, due to high complexity of natural language, the entity disambiguation technology faces a challenge of how to identify the correct meaning of an entity in a context and associate the entity with the correct concept in the knowledge graph.

At present, there are mainly two entity disambiguation methods. One is to model an entity disambiguation problem using a ranking model, and the other is to model an entity disambiguation problem using a classification model.

The method using the ranking model includes a step of generating candidate concepts and a step of sorting the candidate concepts. Simple rules are generally used in the step of generating candidate concepts. However, this often leads to failure in determining proper candidate concepts, and in turn generates cascading errors in the step of sorting.

The method using the classification model is to model the entity disambiguation problem as a single-label text classification task. For example, a model is described in "Medical concept normalization in social media posts with recurrent neural networks", Elena Tutubalina et al., Journal of Biomedical informatics, June 2018, which model consists of a neural network part and an auxiliary feature part. In the neural network part, a Gated Recurrent Unit (GRU) network and an attention mechanism network are used to encode entities. In the auxiliary feature part, the model is enhanced with TF-IDF similarity and Word2Vec similarity.

However, the conventional entity disambiguation methods have the following problems:
- the Word2Vec similarity features do not have sufficient semantic information, and therefore it is difficult to correctly determine a semantic-level similarity between an entity and a concept;
- information of context of the entity is not used effectively;
- an entity usually belongs to a category (such as disease, crop, etc.), the conventional methods however do not utilize category information of the entity.

### SUMMARY

In order to solve one or more problems in the conventional methods, a new method for entity disambiguation using a classification model is provided in the present disclosure, which adopts an advanced BERT model and utilizes context information of an entity, and additionally utilizes information about a category to which the entity belongs through multi-task learning. Therefore, meaning of the entity can be identified more accurately.

According to an aspect of the present disclosure, a computer-implemented method of presenting prompt information to a user who is viewing an electronic text by utilizing a neural network is provided. The electronic text includes an entity and context of the entity, and the entity and the context are each composed of one or more characters. The method includes: generating a mask vector for the entity, wherein the mask vector is used to identify a position of the entity in a statement composed of the entity and the context; generating a first vector and a second vector based on the entity and the context by a BERT layer in the neural network; generating a third vector based on the mask vector and the second vector by an entity average layer in the neural network; concatenating the first vector and the third vector by a concatenation layer in the neural network to generate a fourth vector; predicting which concept of a plurality of predefined concepts the entity corresponds to, based on the fourth vector by a first classifier in the neural network; predicting which type of a plurality of predefined types the entity corresponds to, based on the fourth vector by a second classifier in the neural network; jointly training the first classifier and the second classifier; and determining a concept to which the entity corresponds based on a prediction result of the trained first classifier, and generating the prompt information for presentation to the user based on the determined concept.

According to another aspect of the present disclosure, a device for presenting prompt information to a user who is viewing an electronic text by utilizing a neural network is provided. The electronic text includes an entity and context of the entity, and the entity and the context are each composed of one or more characters. The device includes a memory one or more processors. The memory stores a computer program. The processors are configured to execute the computer program to perform operations of: generating a mask vector for the entity, wherein the mask vector is used to identify a position of the entity in a statement composed of the entity and the context; generating a first vector and a second vector based on the entity and the context by a BERT layer in the neural network; generating a third vector based on the mask vector and the second vector by an entity average layer in the neural network; concatenating the first vector and the third vector by a concatenation layer in the neural network to generate a fourth vector; predicting which concept of a plurality of predefined concepts the entity corresponds to, based on the fourth vector by a first classifier in the neural network; predicting which type of a plurality of predefined types the entity corresponds to, based on the fourth vector by a second classifier in the neural network; jointly training the first classifier and the second classifier; and determining a concept to which the entity corresponds based on a prediction result of the trained first classifier, and generating the prompt information for presentation to the user based on the determined concept.

According to yet another aspect of the present disclosure, a device for presenting prompt information to a user who is viewing an electronic text by utilizing a neural network is provided. The electronic text includes an entity and context of the entity, and the entity and the context are each composed of one or more characters. The device includes a mask vector generation module, a BERT module, an entity average module, a concatenation module, a concept classification module, a type classification module, and a presentation module. The mask vector generation module is configured to generate a mask vector for the entity, wherein the mask vector is used to identify a position of the entity in a statement composed of the entity and the context. The BERT module is configured to generate a first vector and a second vector based on the entity and the context. The entity average module is configured to generate a third vector based on the mask vector and the second vector. The concatenation module is configured to concatenate the first vector and the third vector to generate a fourth vector. The concept classification module is configured to predict which concept of a plurality of predefined concepts the entity corresponds to, based on the fourth vector. The type classification module is configured to predict which type of a plurality of predefined types the entity corresponds to, based on the fourth vector. The concept classification module and the type classification module are jointly trained. The presentation module is configured to determine a concept to which the entity corresponds based on a prediction result of the trained concept classification module, and generate the prompt information for presentation to the user based on the determined concept.

According to yet another aspect of the present disclosure, a storage medium storing a computer program is provided. The computer program, when executed by a computer, causes the computer to perform the method as described above.

### BRIEF DESCRIPTION OF THE DRAWINGS

Figure 1 schematically shows architecture of a neural network according to the present disclosure.
Figure 2 schematically shows an entity, a context, and a mask vector.
Figure 3 shows a module diagram of a device for presenting prompt information about an entity to a user according to the present disclosure.
Figure 4 shows a flowchart of a method for presenting prompt information about an entity to a user according to the present disclosure.
Figure 5 is a block diagram showing an exemplary configuration of computer hardware for implementing the present disclosure.

### DETAILED DESCRIPTION

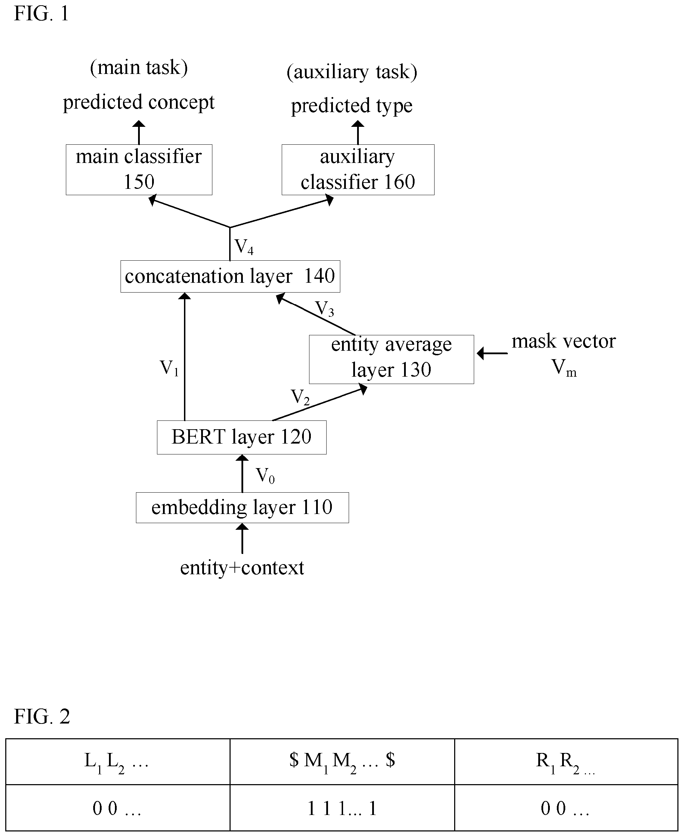

Figure 1 schematically shows architecture of a neural network according to the present disclosure. The neural network includes an embedding layer 110, a BERT layer 120, an entity average layer 130, a concatenation layer 140, a main classifier 150, and an auxiliary classifier 160. An entity, context of the entity, and a mask vector for the entity are inputted to the neural network. These layers will be described in detail below.

The entity and the context of the entity are inputted to the embedding layer 110. Figure 2 shows formats of the entity and the context. As shown in the first row in Figure 2, "M1 M2..." represents a character string of an entity, "L1 L2..." represents a character string before the entity and "R1 R2..." represents a character string following the entity. A marker character "$" is added between the first character of the entity and the preceding text, and a marker character "$" is added between the last character of the entity and the following text. Another character other than "$" may be used as the marker character, which is not limited in the present disclosure.

The One-Hot encoding of the entity and the context shown in the first row in Figure 2 may be represented as a two-dimensional vector [batch_size, sequence length], where batch_size represents the number of input documents, and sequence length represents a length (number of characters) of a statement composed of the entity and the context. The two-dimensional vector of the entity and the context is inputted to the embedding layer 110 to be converted into a non-sparse vector V₀ [batch_size, sequence length, embedding_dim], where embedding_dim represents a dimension of embedding. The vector V₀ is inputted to the BERT layer 120.

BERT is an acronym for "Bidirectional Encoder Representation from Transformers". The BERT layer can generate a semantic representation which contains rich semantic information for the text. In particular, the BERT layer can generate, for each word in the text, a vector representation which corresponds to the word and incorporates semantic information of the full text. For a specific task of natural language processing, the semantic representation produced by a pre-trained BERT layer may be fine-tuned to adapt to the specific task.

In the present disclosure, the BERT layer 120 generates a first vector V₁ and a second vector V₂ based on the input vector V₀. The first vector V₁ represents overall semantic information of the statement composed of the entity and the context, with a dimension of [batch_size, bert_dim]. The second vector V₂ includes hidden vectors for respective words (the entity is one of the words) in the statement, with a dimension of [batch_size, sequence length, bert dim], where bert_dim represents a hidden layer dimension (i.e., output dimension) of the BERT layer 120.

The second vector V2 generated by the BERT layer 120 is inputted to the entity averaging layer 130. In addition, a mask vector Vₘ for the entity is inputted to the entity average layer 130. Generation of the mask vector Vₘ will be described below with reference to Figure 2.

As shown in the first row in Figure 2, the entity "M1 M2...", the marker character "$" and the context "L1 L2..." and "R1 R2..." are mapped to a mask vector Vₘ having a fixed length on a character basis, such that in the mask vector Vₘ, elements at positions corresponding to the characters of the entity and the mark character "$" are set to 1, and elements at positions corresponding to the characters of the context are set to 0, as shown in the second row. Therefore, position of the entity in the statement composed of the entity and the context may be identified based on the mask vector Vₘ.

In particular, during the mapping process, when a predetermined length of the mask vector Vₘ is greater than a total length of characters of the entity, the marker characters and the context, that is, when there is a position in the mask vector Vₘ which does not correspond to any one of the entity, the marker characters and the context, an element at such position is set to 0. On the other hand, when the predetermined length of the mask vector Vₘ is less than the total length of characters of the entity, the marker characters and the context, the context may be truncated such that the total length is equal to the length of the mask vector Vₘ, so as to enable the mapping process.

Referring to Figure 1, the entity average layer 130 multiplies the second vector V₂ and the mask vector Vₘ to obtain a hidden vector for the entity. As described above, the second vector V₂ includes hidden vectors for respective words (the entity is one of the words) in the statement composed of the entity and the context, and the mask vector Vₘ may be used to identify the position of the entity in the statement. Therefore, the hidden vector corresponding to the entity may be extracted by multiplying the second vector V₂ and the mask vector Vₘ.

The hidden vector for the entity includes hidden vectors for respective characters in the entity. The entity average layer 130 further calculates an average vector of the hidden vectors for respective characters on a character dimension, to obtain a third vector V₃. The third vector V₃ is inputted to the concatenation layer 140. A dimension of vector inputted to the entity average layer 130 is [batch_size, sequence length, bert_dim], and a dimension of the output vector V₃ is [batch_size, bert_dim].

The concatenation layer 140 receives the first vector V₁ from the BERT layer 120 and the third vector V₃ from the entity average layer 130. Since the first vector V₁ and the third vector V₃ each have the dimension of [batch size, bert dim], the concatenation layer 140 may concatenate the first vector V₁ and the third vector V₃ to generate a fourth vector V₄. The fourth vector V₄ has a dimension of [batch_size, bert_dim^{∗}2], and is inputted to the main classifier 150 and the auxiliary classifier 160.

The main classifier 150 predicts which concept in the knowledge graph the entity corresponds to, based on the fourth vector V₄, and then outputs an identifier (ID) of the predicted concept. A dimension of the output concept ID is [batch size, class_dim], where class_dim represents the number of concept IDs.

The auxiliary classifier 160 predicts which type of a plurality of predetermined types the entity belongs to, based on the fourth vector V4, and then outputs an ID of the predicted type. A dimension of the output type ID is [batch_size, type_dim], where type_dim represents the number of type IDs.

Similar to pre-establishing a knowledge graph containing a large number of concepts, a number of types may be defined in advance, such as "drug side effects", "chemical raw materials", and the like. A type may cover a wider range than a concept. For example, an entity "Yao Ming" may correspond to a concept of "a basketball player Yao Ming" and a type of "athlete".

In the present disclosure, the main classifier 150 and the auxiliary classifier 160 may be jointly trained. A training process will be described in detail below.

In the training process, a training dataset is inputted to the neural network as shown in Figure 1. The training dataset includes text (including entity and context of the entity), a mask vector corresponding to the text, a plurality of predefined concepts, and a plurality of predefined types. The neural network is trained based on ground truth and prediction results of the main classifier 150 and the auxiliary classifier 160 by using a loss function, to obtain optimal parameters of the neural network. During the training process, initial parameters of the BERT layer 120 may be set as parameters of the BERT pre-trained model.

In addition, a first loss function F1 is established for the main classifier 150, and a second loss function F2 is established for the auxiliary classifier 160. A weighted sum of the first loss function and the second loss function is calculated to obtain a final loss function F. The main classifier 150 and the auxiliary classifier 160 are jointly trained based on the loss function F. In a preferred embodiment, both the first loss function F1 and the second loss function F2 are cross-entropy loss functions. Furthermore, since the classification task of predicting concepts is the main task in the present disclosure, it is preferable to apply a greater weight to the first loss function F1 than the second loss function F2 in calculating the weighted sum.

During the training process, the task of the auxiliary classifier 160 is associated to the task of the main classifier 150. The prediction result of the auxiliary classifier 160 is a certain type which has a coarser granularity, while the prediction result of the main classifier 150 is a certain concept which has a finer granularity. There is a hierarchical relationship between the prediction results of the two classifiers. For example, for the entity "Yao Ming", the auxiliary classifier 160 may output the type of "athlete", and the main classifier 150 may output the concept of "a basketball player Yao Ming". Since jointly learning on multiple tasks may achieve better effects than learning on a single task, provision of the auxiliary classifier 160 may help the main classifier 150 to improve the learning effect.

When the training is completed, it is possible to, in practical applications, use the main classifier 150 to predict a concept to which an entity in the text corresponds, and then generate prompt information for a user based on the concept, and thereby help the user who is reading the text to understand the entity correctly. The prompt information may be provided in various manners (for example, visually or audibly). For example, when the user is viewing a document, the meaning of the entity may be presented to the user by a hyperlink or a pop-up window, or in an audible way.

In particular, there may be a situation in the practical applications where an entity does not correspond to any one of concepts in the knowledge graph, that is, none of the concepts is suitable to explain the entity. In this case, a threshold may be set. For each of the concepts in the knowledge graph, the trained main classifier 150 may output a probability that the entity corresponds to the concept. When the largest probability among predicted probabilities is greater than the threshold, it is determined that the concept associated with the largest probability corresponds to the entity, and then the prompt information for the user may be generated based on the determined concept. On the other hand, if all the predicted probabilities are less than the threshold, it means that the entity is not suitable to be classified into any of the concepts. In this case, no prompt information is to be generated for the entity.

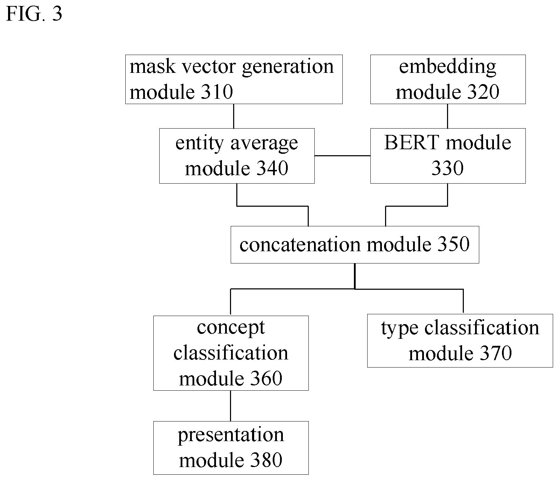

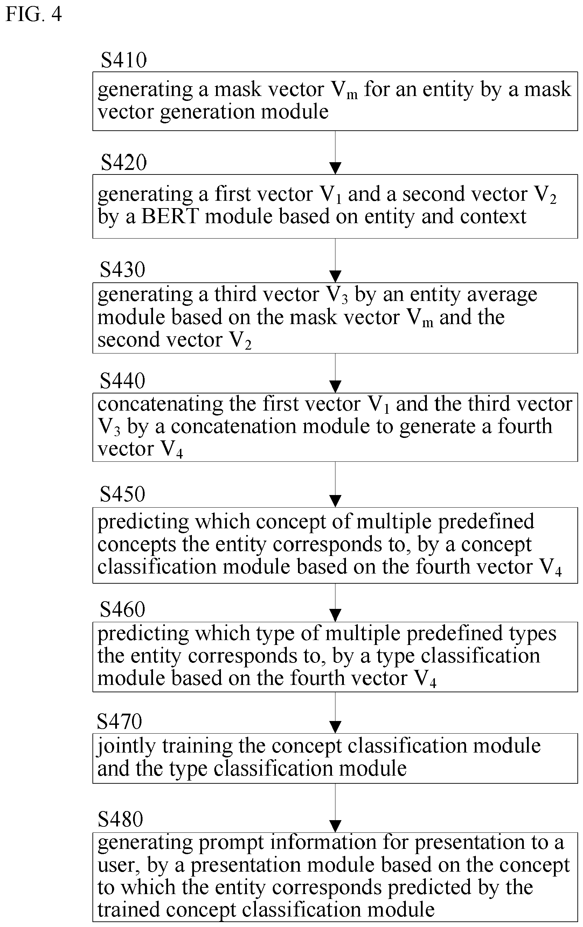

Figure 3 schematically shows a module diagram of a device for presenting prompt information to a user according to the present disclosure, and Figure 4 shows a flowchart of a method for presenting prompt information to a user according to the present disclosure.

Referring to Figure 3 and Figure 4, the device according to the present disclosure includes a mask vector generation module 310, an embedding module 320, a BERT module 330, an entity average module 340, a concatenation module 350, a concept classification module 360, a type classification module 370, and a presentation module 380.

In step S410, a mask vector Vₘ (as shown in Figure 2) for identifying a position of an entity is generated by the mask vector generation module 310 based on the entity and context of the entity. Then, the mask vector Vₘ is inputted to the entity average module 340. Furthermore, the entity and the context are inputted to the embedding module 320 to be converted into a non-sparse vector V₀.

In step S420, a first vector V₁ and a second vector V₂ are generated by the BERT module 330 based on the vector V₀ received from the embedding module 320. The first vector V₁ represents overall semantic information of a statement composed of the entity and the context, and the second vector V₂ includes hidden vectors for respective words in the statement.

In step S430, a third vector V₃ is generated by the entity average module 340 based on the mask vector Vₘ generated by the mask vector generation module 310 and the second vector V₂ generated by the BERT module 330. Specifically, the entity average module 340 multiplies the second vector V₂ and the mask vector Vₘ to obtain a hidden vector for the entity, and the hidden vector for the entity includes hidden vectors for respective characters in the entity. Then, the entity average module 340 calculates an average vector of the hidden vectors for respective characters, as the third vector V₃.

In step S440, the first vector V₁ generated by the BERT module 330 and the third vector V₃ generated by the entity average module 340 are concatenated by the concatenation module 350 to generate a fourth vector V₄.

In step S450, the concept classification module 360 performs the concept classification task based on the fourth vector V₄ generated by the concatenation module 350. For each of a number of predefined concepts, the concept classification module 360 outputs a probability that the entity corresponds to the concept. It is possible to predict which concept the entity corresponds to, based on the output probabilities.

In step S460, the type classification module 370 performs the type classification task based on the fourth vector V₄ generated by the concatenation module 350. For each of a number of predefined types, the type classification module 370 outputs a probability that the entity corresponds to the type. It is possible to predict which type the entity corresponds to, based on the output probabilities.

In step S470, the concept classification module 360 and the type classification module 370 are jointly trained based on the loss function F. Specifically, the loss function F is a weighted sum of a first loss function F₁ for the concept classification module 360 and a second loss function F₂ for the type classification module 370. In a preferred example, a weight applied to the first loss function F₁ may be greater than a weight applied to the second loss function F₂.

In step S480, a concept to which the entity corresponds is predicted by using the trained concept classification module 360. Prompt information for presentation to a user is generated by the presentation module 380 based on the predicted concept, to help the user understand the entity correctly. The presentation module 380 may present the prompt information in the visual and/or audible manner.

It should be noted that the method according to the present disclosure does not have to be performed in the order shown in Figure 4, but may be performed in a different order as long as it is technically possible.

The neural network model and the method of the present disclosure have been described in detail with reference to the embodiments. The present disclosure provides a new entity disambiguation scheme, in which the advanced BERT model is adopted, context information of an entity is utilized, and information on a type to which the entity belongs is effectively utilized through multi-task learning. As such, performance of the neural network model may be improved, a possibility of correctly identifying the meaning of the entity is increased, and more accurate prompt information may be provided to the user.

The method described in the embodiments may be implemented by software, hardware, or a combination of software and hardware. Programs included in the software may be stored in advance in a storage medium provided inside or outside the device. As an example, during execution, these programs are written to a random access memory (RAM) and executed by a processor (such as a CPU), implementing the methods and processes described herein.

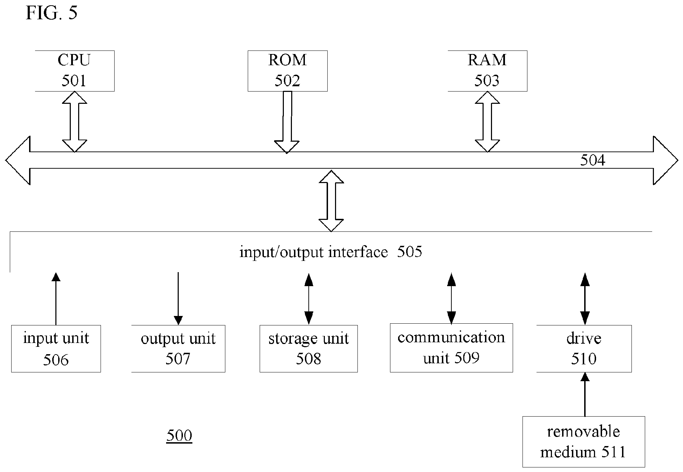

Figure 5 is a block diagram showing an exemplary configuration of computer hardware for implementing the method of the present disclosure based on a program. The computer hardware is an example of the device for presenting prompt information according to the present disclosure.

As shown in Figure 5, in a computer 500, a central processing unit (CPU) 501, a read only memory (ROM) 502, and a random access memory (RAM) 503 are connected to each other via a bus 504.

An input/output interface 505 is further connected to the bus 504. The input/output interface 505 is connected with the following components: an input unit 506 configured with a keyboard, a mouse, a microphone, and the like; an output unit 507 configured with a display, a speaker, and the like; a storage unit 508 configured with a hard disk, a non-volatile memory, and the like; a communication unit 509 formed by a network interface card, such as a local area network (LAN) card, a modem, and the like; and a drive 510 that drives a removable medium 511, where the removable medium 511 is a magnetic disk, an optical disk, a magneto-optical disk, or a semiconductor memory, for example.

In the computer having such structure, the CPU 501 loads a program stored in the storage unit 508 into the RAM 503 via the input/output interface 505 and the bus 504, and executes the program so as to execute the above-described method.

The program to be executed by the computer (CPU 501) may be recorded on a removable medium 511. The removable medium 511 serves as a package medium, which is formed by, for example, a magnetic disk (including a floppy disk), an optical disk (including a compact disk-read only memory (CD)-ROM)), a digital versatile disc (DVD), a magneto-optical disc, or a semiconductor memory. Furthermore, the program to be executed by the computer (CPU 501) can be provided via a wired or wireless transmission medium such as a local area network, the Internet, or digital satellite broadcasting.

When the removable medium 511 is installed in the drive 510, the program may be installed in the storage unit 508 via the input/output interface 505. In addition, the program may be received by the communication unit 509 via a wired or wireless transmission medium and may be installed in the storage unit 508. Alternatively, the program may be pre-installed in the ROM 502 or the storage unit 508.

The program executed by the computer may be a program that performs processes according to the order described in this specification, or may be a program that performs processes in parallel or when necessary (for example, when invoked).

The units or means described herein are only in a logical sense and do not strictly correspond to physical devices or physical entities. For example, functions of a unit described herein may be implemented by multiple physical entities, or functions of multiple units described herein may be implemented by a single physical entity. Furthermore, features, components, elements, steps, and the like, described in an embodiment are not limited to that embodiment, but may also be applied to other embodiments, for example, to replace certain features, components, elements, steps, and the like, in the other embodiments, or to combine with them.

The scope of the present disclosure is not limited to the specific embodiments described herein. It should be understood by those of ordinary skill in the art that, depending upon design requirements and other factors, various modifications or variations of the embodiments herein may be made without departing from the principles and spirit of the disclosure. The scope of the present disclosure is defined by the appended claims and their equivalents.

### Appendix

(1) A computer-implemented method of presenting prompt information to a user who is viewing an electronic text by utilizing a neural network, wherein the electronic text includes an entity and context of the entity, and the entity and the context are each composed of one or more characters,
   the method comprising:
   generating a mask vector (Vₘ) for the entity, the mask vector being used to identify a position of the entity in a statement composed of the entity and the context;
   generating a first vector (V₁) and a second vector (V₂) based on the entity and the context, by a BERT layer in the neural network;
   generating a third vector (V₃) based on the mask vector (Vₘ) and the second vector (V₂), by an entity average layer in the neural network;
   concatenating the first vector (V₁) and the third vector (V₃) by a concatenation layer in the neural network to generate a fourth vector (V₄);
   predicting which concept of a plurality of predefined concepts the entity corresponds to, based on the fourth vector (V₄), by a first classifier in the neural network;
   predicting which type of a plurality of predefined types the entity corresponds to, based on the fourth vector (V₄), by a second classifier in the neural network;
   jointly training the first classifier and the second classifier; and
   determining a concept to which the entity corresponds based on a prediction result of the trained first classifier, and generating the prompt information for presentation to the user based on the determined concept.
(2) The method according to (1), wherein generating the mask vector (Vₘ) for the entity further comprises:
   adding a marker character between a first character of the entity and the preceding text, and adding the marker character between a last character of the entity and the following text;
   mapping the entity, the marker characters and the context to a vector with a fixed length on a character basis, to generate the mask vector (Vₘ),
   wherein in the mask vector (Vₘ), elements at positions corresponding to the characters of the entity and the marker characters are set to 1, and elements at positions corresponding to the characters of the context are set to 0.
(3) The method according to (2), wherein when the length of the vector is greater than a total length of characters of the entity, the marker characters and the context, elements at positions not corresponding to the entity, the marker characters and the context are set to 0, and
   wherein when the length of the vector is less than the total length of characters of the entity, the marker characters and the context, the context is truncated such that the total length is equal to the length of the vector.
(4) The method according to (1), wherein the first vector (V₁) represents overall semantic information of the statement composed of the entity and the context, and the second vector (V₂) includes hidden vectors for respective words in the statement.
(5) The method according to (4), wherein generating the third vector (V₃) further comprises:
   multiplying the second vector (V₂) and the mask vector (Vₘ) to obtain a hidden vector for the entity, wherein the hidden vector for the entity includes hidden vectors for respective characters in the entity;
   calculating, on the character dimension, an average vector of the hidden vectors for the respective characters in the entity, as the third vector (V₃).
(6) The method according to (1), wherein jointly training the first classifier and the second classifier further comprises:
   establishing a first loss function for the first classifier and a second loss function for the second classifier;
   performing a weighted addition to the first loss function and the second loss function, wherein a weight for the first loss function is greater than a weight for the second loss function; and
   training the first classifier and the second classifier in such a manner that the resulted loss function after the weighted addition is minimized.
(7) The method according to (6), wherein each of the first loss function and the second loss function is a cross-entropy loss function.
(8) The method according to (1), further comprising:
   for each of the plurality of concepts, predicting a probability that the entity corresponds to the concept by the trained first classifier;
   if a maximum probability among the predicted probabilities is greater than a predetermined threshold, determining that a concept associated with the maximum probability corresponds to the entity; and
   if all the predicted probabilities are less than the predetermined threshold, generating no prompt information for the entity.
(9) The method according to (1), wherein the prompt information is presented to the user in at least one of a visual manner and an auditory manner.
(10) A device for presenting prompt information to a user who is viewing an electronic text by utilizing a neural network, wherein the electronic text includes an entity and context of the entity, and the entity and the context are each composed of one or more characters,
   the device comprising:
   a memory storing a computer program; and
   one or more processors executing the computer program to perform operations of:
      generating a mask vector (Vₘ) for the entity, the mask vector being used to identify a position of the entity in a statement composed of the entity and the context;
      generating a first vector (V₁) and a second vector (V₂) based on the entity and the context, by a BERT layer in the neural network;
      generating a third vector (V₃) based on the mask vector (Vₘ) and the second vector (V₂), by an entity average layer in the neural network;
      concatenating the first vector (V₁) and the third vector (V₃) by a concatenation layer in the neural network to generate a fourth vector (V₄);
      predicting which concept of a plurality of predefined concepts the entity corresponds to, based on the fourth vector (V₄), by a first classifier in the neural network;
      predicting which type of a plurality of predefined types the entity corresponds to, based on the fourth vector (V₄), by a second classifier in the neural network;
      jointly training the first classifier and the second classifier; and
      determining a concept to which the entity corresponds based on a prediction result of the trained first classifier, and generating the prompt information for presentation to the user based on the determined concept.
(11) A storage medium storing a computer program that, when executed by a computer, causes the computer to perform the method of presenting prompt information to a user according to any one of (1) to (9).

## Claims

1. A computer-implemented method of presenting prompt information to a user who is viewing an electronic text by utilizing a neural network, wherein the electronic text includes an entity and context of the entity, and the entity and the context are each composed of one or more characters,
the method comprising:
generating a mask vector (Vₘ) for the entity, the mask vector being used to identify a position of the entity in a statement composed of the entity and the context;
generating a first vector (V₁) and a second vector (V₂) based on the entity and the context, by a BERT layer in the neural network;
generating a third vector (V₃) based on the mask vector (Vₘ) and the second vector (V₂), by an entity average layer in the neural network;
concatenating the first vector (V₁) and the third vector (V₃) by a concatenation layer in the neural network to generate a fourth vector (V₄);
predicting which concept of a plurality of predefined concepts the entity corresponds to, based on the fourth vector (V₄), by a first classifier in the neural network;
predicting which type of a plurality of predefined types the entity corresponds to, based on the fourth vector (V₄), by a second classifier in the neural network;
jointly training the first classifier and the second classifier; and
determining a concept to which the entity corresponds based on a prediction result of the trained first classifier, and generating the prompt information for presentation to the user based on the determined concept.

2. The method according to claim 1, wherein generating the mask vector (Vₘ) for the entity further comprises:
adding a marker character between a first character of the entity and the preceding text, and adding the marker character between a last character of the entity and the following text;
mapping the entity, the marker characters and the context to a vector with a fixed length on a character basis, to generate the mask vector (Vₘ),
wherein in the mask vector (Vₘ), elements at positions corresponding to the characters of the entity and the marker characters are set to 1, and elements at positions corresponding to the characters of the context are set to 0.

3. The method according to claim 2, wherein when the length of the vector is greater than a total length of characters of the entity, the marker characters and the context, elements at positions not corresponding to the entity, the marker characters and the context are set to 0, and
wherein when the length of the vector is less than the total length of characters of the entity, the marker characters and the context, the context is truncated such that the total length is equal to the length of the vector.

4. The method according to claim 1, wherein the first vector (V₁) represents overall semantic information of the statement composed of the entity and the context, and the second vector (V₂) includes hidden vectors for respective words in the statement.

5. The method according to claim 4, wherein generating the third vector (V₃) further comprises:
multiplying the second vector (V₂) and the mask vector (Vₘ) to obtain a hidden vector for the entity, wherein the hidden vector for the entity includes hidden vectors for respective characters in the entity;
calculating, on the character dimension, an average vector of the hidden vectors for the respective characters in the entity, as the third vector (V₃).

6. The method according to claim 1, wherein jointly training the first classifier and the second classifier further comprises:
establishing a first loss function for the first classifier and a second loss function for the second classifier;
performing a weighted addition to the first loss function and the second loss function, wherein a weight for the first loss function is greater than a weight for the second loss function; and
training the first classifier and the second classifier in such a manner that the resulted loss function after the weighted addition is minimized.

7. The method according to claim 6, wherein each of the first loss function and the second loss function is a cross-entropy loss function.

8. The method according to claim 1, further comprising:
for each of the plurality of concepts, predicting a probability that the entity corresponds to the concept by the trained first classifier;
if a maximum probability among the predicted probabilities is greater than a predetermined threshold, determining that a concept associated with the maximum probability corresponds to the entity; and
if all the predicted probabilities are less than the predetermined threshold, generating no prompt information for the entity.

9. A device for presenting prompt information to a user who is viewing an electronic text by utilizing a neural network, wherein the electronic text includes an entity and context of the entity, and the entity and the context are each composed of one or more characters,
the device comprising:
a memory storing a computer program; and
one or more processors executing the computer program to perform operations of:
generating a mask vector (Vₘ) for the entity, the mask vector being used to identify a position of the entity in a statement composed of the entity and the context;
generating a first vector (V₁) and a second vector (V₂) based on the entity and the context, by a BERT layer in the neural network;
generating a third vector (V₃) based on the mask vector (Vₘ) and the second vector (V₂), by an entity average layer in the neural network;
concatenating the first vector (V₁) and the third vector (V₃) by a concatenation layer in the neural network to generate a fourth vector (V₄);
predicting which concept of a plurality of predefined concepts the entity corresponds to, based on the fourth vector (V₄), by a first classifier in the neural network;
predicting which type of a plurality of predefined types the entity corresponds to, based on the fourth vector (V₄), by a second classifier in the neural network;
jointly training the first classifier and the second classifier; and
determining a concept to which the entity corresponds based on a prediction result of the trained first classifier, and generating the prompt information for presentation to the user based on the determined concept.

10. A storage medium storing a computer program that, when executed by a computer, causes the computer to perform the method of presenting prompt information to a user according to any one of claims 1 to 8.
